(19) Europäisches Patentamt / European Patent Office / Office européen des brevets

(11) **EP 3 482 149 B1**

(12) **FASCICULE DE BREVET EUROPEEN**

(45) Date de publication et mention
de la délivrance du brevet:
**23.10.2024 Bulletin 2024/43**

(21) Numéro de dépôt: **17751788.5**

(22) Date de dépôt: **07.07.2017**

(51) Classification Internationale des Brevets (IPC):
**F41H 5/04** $^{(2006.01)}$    **C04B 35/565** $^{(2006.01)}$
**C04B 35/63** $^{(2006.01)}$    **C04B 38/00** $^{(2006.01)}$

(52) Classification Coopérative des Brevets (CPC):
(C-Sets disponibles)
**C04B 35/597; C04B 35/565; C04B 35/6263;**
**C04B 35/6316; C04B 38/0074; F41H 5/0428;**
C04B 2111/00612; C04B 2111/00974;
C04B 2235/3206; C04B 2235/3208;
C04B 2235/3213; C04B 2235/3215;
C04B 2235/3217; C04B 2235/3272;
C04B 2235/349;          (Cont.)

(86) Numéro de dépôt international:
**PCT/FR2017/000139**

(87) Numéro de publication internationale:
**WO 2018/011477 (18.01.2018 Gazette 2018/03)**

(54) **PLAQUE DE BLINDAGE**

PANZERUNGSPLATTE

ARMOUR PLATE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.07.2016 FR 1656644**

(43) Date de publication de la demande:
**15.05.2019 Bulletin 2019/20**

(73) Titulaires:
• **SAINT-GOBAIN CENTRE DE RECHERCHES
ET D'ETUDES EUROPEEN
92400 Courbevoie (FR)**
• **Rossiquet, Gilles
16100 Louzac Saint-André (FR)**

(72) Inventeurs:
• **ROSSIQUET, Gilles
16100 Louzac Saint-André (FR)**
• **MOELLER, Malte
96472 Roedental (DE)**

(74) Mandataire: **Saint-Gobain Recherche
Département Propriété Industrielle
39 Quai Lucien Lefranc
93300 Aubervilliers (FR)**

(56) Documents cités:
**WO-A1-2014/096846    FR-A1- 2 953 512
GB-A- 2 457 688**

(52) Classification Coopérative des Brevets (CPC): (Cont.)
C04B 2235/3821; C04B 2235/3873;
C04B 2235/5427; C04B 2235/5436;
C04B 2235/5445; C04B 2235/5472;
C04B 2235/6027; C04B 2235/606; C04B 2235/656;
C04B 2235/658; C04B 2235/72; C04B 2235/722;
C04B 2235/728; C04B 2235/75; C04B 2235/767;
C04B 2235/77; C04B 2235/786; C04B 2235/94;
C04B 2235/95; C04B 2235/96

C-Sets

**C04B 38/0074, C04B 35/565, C04B 38/0058**

**Description**

L'invention se rapporte à des produits à propriétés antibalistiques, c'est-à-dire dont la dureté est suffisamment élevée pour justifier leur utilisation dans des éléments d'armures ou de blindage.

L'invention trouve notamment son application comme élément d'armures ou de blindage permettant de protéger des véhicules (terrestres, maritimes ou aériens) ou des installations fixes (bâtiment, mur d'enceinte, poste de garde notamment).

En particulier, en ce qui concerne les véhicules blindés protégés des projectiles par de tels produits antibalistiques, la masse supplémentaire liée au port d'un blindage est un élément essentiel. En effet cette masse supplémentaire peut conduire à un alourdissement excessif et être un obstacle aux déplacements rapides du véhicule et limiter son rayon d'action.

Les métaux et l'alumine sont couramment utilisés comme blindage pour véhicules. On connaît en particulier des systèmes formés par l'assemblage dit « mosaïque » de pièces céramiques ayant une forme polygonale déterminée et résistants individuellement à l'impact d'un projectile. JP2005247622 décrit par exemple un arrangement de telles formes de 20 à 100 mm de largeur, pour une épaisseur de quelques mm.

Ce type de mosaïques de pièces présente l'avantage de résister à des tirs successifs (protection dite « multi-shot » ou « multi-hit » en anglais). Même si la probabilité de deux tirs à l'endroit d'une même pièce est faible et généralement non considéré dans les normes, elle s'avère néanmoins être un problème sensible devant les avancées de l'armement actuel. L'assemblage de telles structures « mosaïques » est cependant long et coûteux. De plus, il peut être difficile de maintenir une tolérance globale faible de l'ensemble du fait que les tolérances de chaque pièce s'ajoutent pour constituer l'assemblage. Cela a un impact sur la largeur des espaces résiduels entre les pièces (plans de joints) produits par l'assemblage. Par ailleurs, si celui-ci présente en plus une forme incurvée, les espaces constituent une zone de faiblesse importante de ce système de protection lorsque le projectile impacte ces endroits.

Il existe d'autres systèmes dits monolithiques, c'est à dire formés par une seule pièce ou encore par un nombre très limité de pièces de grande surface, chaque monolithe ayant une surface supérieure à 150 cm$^2$, de façon à réduire le nombre de joints. Ainsi de nombreux matériaux ont été proposés pour constituer une armure destinée aux personnes dont le rapport masse de blindage sur surface de protection doit rester faible, typiquement moins de 50 kg/m$^2$, ou un blindage non personnel destiné à des véhicules ou des installations fixes dont le rapport masse sur surface de protection est supérieur typiquement à 60 kg/m$^2$. Ce rapport sur des protections non personnelles étant nécessaire et considéré pour résister à des munitions plus énergétiques et/ou plus perforantes ou encore de plus gros calibre, par exemple des calibres 12,7mm, 14,5mm ou encore 25mm, voire même 30mm.

A titre d'exemple :

- pour une protection de type STANAG 4 (munition: 14,5mm API B32), le ratio masse de la plaque de blindage métallique sur la surface soumise à l'impact est de typiquement de l'ordre de 180kg/m$^2$,
- pour une protection de type STANAG 5 (munition: calibre 25mm), le ratio est typiquement de l'ordre de 200 kg/m$^2$,
- pour une protection de type STANAG 6 (munition: calibre 30mm), le ratio est typiquement de l'ordre de 280kg/m$^2$.

En particulier, parmi les matériaux céramiques utilisés dans une telle application figurent les produits à base de carbure de silicium (SiC).

La publication WO 2013/186453 A1 décrit un tel produit dont la forme des grains et la composition chimique du produit sont spécifiées afin de constituer une armure ou un élément de blindage.

La publication EP 1380809 A2 dévoile par ailleurs un système comportant deux couches de matériau, la première couche A plus dense formée en surface par un carbure et un métal, par exemple un carbure de silicium SiC et du silicium métallique Si, et une deuxième couche B plus poreuse formée par le carbure, par exemple du carbure de silicium.

La publication EP1710218A1 dévoile un matériau fritté à base de nitrure de silicium et de carbure de tungstène avec l'aide d'additifs tels que des terres rares, du tungstène ajouté de préférence sous forme oxydée.

On connaît aussi de US4604249 ou US4415632 des produits poreux de SiC utilisables pour le blindage de véhicules mais ce type de blindage monolithique ainsi formulé ne peut résister à un deuxième tir, la céramique constituant le blindage étant trop fragmentée après un premier tir dans des conditions standard connues de l'homme du métier telles que suivant les standards STANAG 4569 et AEP 55 (notamment le niveau de protection 4 où la distance maximale entre les deux premiers tirs successifs est de 10cm avec un projectile 14,5mm API B32). Cette norme représente un défi en matière de résistance multi-impact pour l'homme du métier.

Il est proposé par US6389594B1 une enveloppe externe (ou «outershell» en anglais) de l'armure en céramique monolithique qui est mise sous contrainte de compression. Cette enveloppe est réalisée en un matériau polymère à base d'aramide ou d'autres matériaux antibalistiques notamment à base fibres de verre. Cette enveloppe externe n'empêche pas la fracturation du bloc monolithique et si celui-ci présente une taille supérieure à 100 cm$^2$ et/ou si le projectile est de gros calibre, du fait de l'importante énergie à dissiper, l'effet de « blocage » est trop faible, la décohésion du bloc monolithique est forte et la résistance à des tirs multiples reste trop faible.

Plus récemment, WO2008/130451 (EP2095055A1) a proposé une approche consistant à réduire la propagation de la vague de contraintes liée à l'impact du projectile en utilisant une enveloppe formée cette fois-ci par un média perméable, typiquement une couche de fibres organiques (par exemple aramide) fixée sur la pièce en céramique puis imprégnée par un polymère hyper élastique afin d'absorber l'énergie liée à l'impact du projectile et réduire la propagation de fissures et la multifracturation de la céramique. Ce système n'a d'intérêt que pour des pièces céramiques également de faible dimension et l'exemple testé est réalisé à partir d'un assemblage de 9 pièces céramiques de dimension 100mm*100mm*8mm. L'énergie absorbée par cette nouvelle enveloppe ne peut empêcher la décohésion d'un bloc céramique d'une surface supérieure à 150cm$^2$.

La demande de brevet WO2014/096846 décrit des matériaux présentant une forte résistance mécanique, constitués d'une phase de carbure de silicium, d'une phase de SiAlON et d'une phase liante intergranulaire comprenant au moins une terre rare. La phase liante selon la présente invention est une phase de nitrure de silicium ou d'oxynitrure de silicium et ne comprend pas une telle phase liante comprenant au moins une terre rare.

Il existe donc continuellement un besoin d'amélioration des produits utilisés comme blindage, cette amélioration étant mesurée notamment par leur performance balistique. L'objet de la présente invention est donc de proposer un nouveau produit, différent des produits actuellement utilisés dans le domaine, et dont les performances sont améliorées, en particulier de manière à pouvoir résister à la perforation, même sous l'impact successif de deux projectiles dans une même région du blindage.

En particulier, il existe aujourd'hui un besoin pour un blindage monolithique en céramique d'une surface supérieure à 150 cm$^2$, de préférence supérieure à 200 cm$^2$, voire supérieure à 500 cm$^2$ ou même supérieure à 1000 cm$^2$, capable de résister à la fragmentation après au moins deux tirs successifs de projectiles perforants de diamètre supérieur ou égal à 12,7mm dans une même région du blindage, mais qui présente cependant une masse volumique apparente faible, typiquement inférieure à 3,5 g/cm$^3$, voire inférieure à 3,3 g/cm$^3$, afin de protéger sans trop les alourdir des véhicules (terrestres, maritimes voire aériens) ou des installations fixes, telles que des bâtiments.

Selon un premier aspect général, la présente invention se rapporte à une plaque de blindage antibalistique comportant un corps céramique constitué dans un matériau dur, muni sur sa face intérieure d'un revêtement arrière de dissipation de l'énergie, de préférence constitué dans un matériau de dureté inférieure à celui du matériau constituant le corps céramique.

Dans une plaque selon l'invention :

- ledit corps céramique est monolithique et présente une surface supérieure à 150 cm$^2$, une épaisseur supérieure à 12 mm et une masse volumique apparente inférieure à 3,5 g/cm$^3$,
- le matériau constituant le corps céramique comprend des grains de matériau céramique de dureté Vickers supérieure à 15 GPa et une matrice liant lesdits grains, ladite matrice étant essentiellement constituée d'une phase de nitrure de silicium et/ou d'une phase d'oxynitrure de silicium ou d'une phase SiMON où M est un métal choisi parmi Ca, Mg, Sr, Ba, ladite matrice représentant entre 5 et 40% poids, de préférence entre 15 et 35% poids, dudit matériau constitutif du corps céramique,
- lesdits grains de matériau céramique présentent un diamètre équivalent maximal inférieur ou égal à 800 micromètres, de préférence inférieur ou égal à 500 micromètres ou même inférieur ou égal à 300 micromètres.
- ledit matériau constituant le corps céramique présente une porosité ouverte supérieure à 5% et inférieure à 14%,
- la teneur massique en silicium sous la forme métallique dans ledit matériau, exprimée par mm d'épaisseur dudit corps, est inférieure à 0,5%.

On décrit ci-après différents modes de réalisations préférés de la présente invention, qui peuvent bien évidemment, le cas échéant, être combinés entre eux :

- lesdits grains de matériau céramique présentent un diamètre équivalent maximal supérieur à 5 micromètres, de préférence supérieur à 10 micromètres ou même supérieur à 50 micromètres,
- le matériau constituant le corps céramique comprend des grains d'un carbure ou d'un borure métallique, de préférence encore des grains de carbure de silicium ou de bore ou un mélange de ces deux carbures et de manière préféré comprend uniquement des grains de carbure de silicium,
- ledit matériau constituant le corps céramique présente une porosité ouverte supérieure à 6%, de préférence encore supérieure à 7% ou même supérieure à 8%,
- ledit matériau constituant le corps céramique présente une porosité ouverte inférieure à 13%, de préférence encore supérieure à 12%,
- le matériau constituant le corps céramique comprend des grains de matériau céramique de dureté Vickers supérieure à 20 GPa,

- ledit corps céramique présente une surface supérieure à 500 cm$^2$, de préférence encore supérieure à 1000 cm$^2$,
- ledit corps céramique présente une épaisseur supérieure à 15 mm, de préférence encore supérieure à 20 mm,
- ledit corps céramique présente une masse volumique apparente inférieure à 3,2 g/cm$^3$, de préférence une masse volumique apparente inférieure à 3,0 g/cm$^3$,
- la teneur massique en silicium sous la forme métallique dans ledit matériau, est inférieure à 0,4% par mm d'épaisseur dudit corps, de préférence encore est inférieure à 0,2% par mm d'épaisseur dudit corps, ou de façon très préférée inférieure à 0,1% par mm d'épaisseur dudit corps,
- la teneur massique en silicium sous la forme métallique dans ledit matériau est supérieure à 0,005% par mm d'épaisseur dudit corps, de préférence encore est supérieure à 0,01% par mm d'épaisseur dudit corps,
- la matrice représentant entre 5 et 40% poids dudit matériau constitutif du corps céramique,
- le silicium sous la forme métallique est présent dans ledit matériau constituant le corps céramique selon un gradient de concentration depuis les bords externes jusqu'au coeur dudit corps, selon son épaisseur,
- ladite phase dans la matrice est choisie parmi $Si_3N_4$, $Si_2ON_2$ ou SiMON où M est un métal choisi parmi Ca, Mg, Sr, Ba,
- la plaque présente un ratio masse sur surface, mesuré en kg/m$^2$, supérieur à 60 et de préférence inférieur à 200,
- la somme totale des terres rares dans le matériau constituant le corps céramique est inférieure à 0,05% poids, de préférence encore est inférieure à 0,01% poids,
- les grains constitutifs du matériau céramique sont constitués essentiellement de SiC, de préférence sous forme alpha,
- les grains, notamment de SiC, dans le matériau constituant le corps céramique présentent un diamètre équivalent maximal compris entre 10 micromètres et 500 micromètres, de préférence un diamètre équivalent moyen compris entre 50 et 300 micromètres, voire entre 100 et 200 micromètres,
- le matériau constituant le corps céramique ne contient aucun élément du groupe des terres rares,
- le matériau constituant le corps céramique ne contient pas d'yttrium,
- le matériau constituant le corps céramique ne contient pas de lanthane,
- le matériau constituant le corps céramique ne contient aucun élément du groupe des actinides,
- les grains constitutifs du matériau céramique, présentent un diamètre équivalent moyen supérieur à 5 micromètres et inférieur à 300 micromètres, de préférence compris entre 50 et 200 micromètres,
- la teneur totale en silicium sous la forme métallique est inférieure à 10% du poids total du matériau constituant le corps céramique, de préférence est inférieure à 5%, voire inférieure à 1%, du poids total du matériau constituant le corps céramique,
- la teneur en azote dans le matériau constituant le corps céramique est supérieure à 4% poids,
- la matrice liante est essentiellement constituée de nitrure de silicium, notamment de formulation $Si_3N_4$ et/ou de l'oxynitrure de silicium $Si_2ON_2$, de préférence est essentiellement constituée de nitrure de silicium notamment de formulation $Si_3N_4$,
- la teneur totale en aluminium sous la forme métallique est inférieure à 1% du poids total du matériau constituant le corps céramique, de préférence est inférieure à 0,5%, du poids total du matériau constituant le corps céramique,
- alternativement, la matrice liante comprend ou est essentiellement constituée d'une phase SiMON où M est un métal choisi parmi Ca, Mg, Sr, Ba, de préférence où M est Mg,
- le matériau constituant le revêtement arrière est choisi parmi les polyéthylènes PE, notamment les polyéthylènes ultra haute densité (UHMPE), les fibres de verre ou de carbone, les aramides, les métaux tel que l'aluminium, le titane ou leur alliages ou l'acier,
- l'ensemble corps céramique-revêtement arrière est entouré par une enveloppe d'un matériau de confinement,
- le matériau constituant l'enveloppe est choisi parmi les polyéthylènes PE, notamment les polyéthylènes ultra haute densité (UHMPE), les fibres de verre ou de carbone, les aramides, les métaux tel que l'aluminium ou l'acier.

L'invention se rapporte également au corps céramique dont les caractéristiques viennent d'être décrites précédemment, et notamment à un corps céramique monolithique sous forme de plaque, présentant une surface supérieure à 150 cm$^2$ et une épaisseur supérieure à 12 mm, une masse volumique apparente inférieure à 3,5 g/cm$^3$, constitué d'un matériau'comprenant :

- des grains de matériau céramique de dureté Vickers supérieure à 15 GPa, de préférence un carbure ou un borure métallique, de préférence encore un carbure de silicium ou de bore ou un mélange de ces deux carbures, lesdits grains présentant un diamètre équivalent maximal inférieur ou égal à 500 micromètres, et
- une matrice liant lesdits grains, ladite matrice étant essentiellement constituée d'une phase nitrure de silicium et/ou d'une phase oxynitrure de silicium ou d'une phase SiMON où M est un métal choisi parmi Ca, Mg, Sr, Ba, ladite matrice représentant entre 5 et 40% poids dudit matériau constitutif du corps céramique,

ledit matériau céramique présentant une porosité ouverte supérieure à 5% et inférieure à 14% et une teneur massique en silicium sous la forme métallique dans ledit matériau, exprimée par mm d'épaisseur dudit corps, inférieure à 0,5%.

Sans qu'il soit besoin ici de répéter, par mesure de concision, l'ensemble des caractéristiques techniques déjà décrites précédemment en relation avec la plage de blindage, un corps céramique selon l'invention couvre bien entendu l'ensemble des mêmes modes préférés.

On donne les indications et définitions suivantes, en relation avec la description précédente de la présente invention :

Par diamètre équivalent de grains, on entend la demisomme de la plus grande longueur du grain et de la plus grande largeur du grain, mesurée dans une direction perpendiculaire à ladite plus grande longueur.

Par matériau dur, on entend un matériau dont la dureté est suffisamment élevée pour justifier son utilisation dans des éléments d'armures ou de blindage.

Les diamètres équivalents maximal et moyen sont classiquement déterminés à 'partir de l'observation de la microstructure du matériau fritté constituant le corps céramique, classiquement grâce à des images prises en MEB (microscopie électronique à balayage) sur une coupe du produit fritté. Il a été vérifié dans les exemples qui suivent que ladite microstructure est sensiblement identique, quelque soit l'orientation de la coupe.

Par masse volumique apparente d'un produit, on entend au sens de la présente invention, le rapport égal à la masse du produit divisée par le volume qu'occupe ledit produit. Elle est classiquement déterminée par la méthode d'Archimède. La norme ISO 5017 précise par exemple les conditions d'une telle mesure. Cette norme permet aussi de mesurer la porosité ouverte au sens de la présente invention.

Par « matrice » du corps céramique, on entend une phase cristallisée ou non, assurant une structure sensiblement continue entre les grains et obtenue, lors du frittage, à partir des constituants de la charge de départ et éventuellement des constituants de l'environnement gazeux de cette charge de départ. Une matrice entoure sensiblement les grains de la fraction granulaire, c'est-à-dire les enrobe.

Dans un corps céramique fritté selon l'invention, les grains céramiques sont liés par la matrice. Lors du frittage, ils conservent sensiblement la forme et la nature chimique qu'ils présentaient dans la charge de départ. Dans le corps céramique fritté, la matrice et les grains représentent ensemble 100% de la masse du produit.

Une matrice obtenue par frittage réactif présente des particularités. Notamment, lors du frittage réactif, il se produit une nitruration des métaux précurseurs des phases cristallisées azotées. L'augmentation de volume qui en résulte, typiquement de 1 à 30%, permet avantageusement de combler les pores de la matrice et/ou de compenser le retrait occasionné par le frittage des grains. Le frittage réactif permet ainsi d'améliorer la résistance mécanique du produit fritté. Les produits frittés réactivement présentent ainsi une porosité fermée significativement plus faible que celle(s) des autres produits frittés dans des conditions de température et de pression similaires. A la cuisson, les produits frittés réactivement ne présentent sensiblement pas de retrait.

La composition en phase du matériau constituant le corps céramique monolithique est normalement obtenue par diffraction des rayons X et analyse de Rietveld.

Les teneurs en azote élémentaire (N) dans les produits frittés ont été mesurées au moyen d'analyseurs LECO (LECO TC 436DR ; LECO CS 300). Les valeurs sont fournies en pourcentages massiques.

Les phases cristallisées, notamment les phases cristallisées azotées ont été mesurées par diffraction aux rayons X et quantifiées selon la méthode de Rietveld.

Le silicium résiduel sous forme métallique dans le matériau fritté ou après cuisson est normalement mesuré selon la méthode connue de l'homme du métier et référencée sous ANSI B74-151992 (R2000).

Dans le matériau céramique selon l'invention, la teneur en silicium résiduel est généralement maximale au cœur du corps céramique, c'est-à-dire sensiblement au milieu de son épaisseur.

Il a en outre pu être déterminé par la société déposante que la teneur en silicium résiduelle conditionne fortement les propriétés antibalistiques du matériau céramique. L'aluminium résiduel sous forme métallique dans le matériau fritté ou après cuisson peut être mesuré par diffraction aux rayons X et quantifiées selon la méthode de Rietveld.

La dureté Vickers de grains céramique peut être mesurée à l'aide d'une pointe pyramidale normalisée en diamant de base carrée et d'angle au sommet entre faces égal à 136°. L'empreinte réalisée sur le grain a donc la forme d'un carré; on mesure les deux diagonales d1 et d2 de ce carré à l'aide d'un appareil optique. La dureté est calculée à partir de la force appliquée sur la pointe diamantée et la valeur d moyenne de $d_1$ et $d_2$ selon la formulation suivante :

$$H_V = 0,189 \cdot \frac{F}{d^2} \quad \text{avec} \quad \begin{array}{l} H_V = \text{Dureté Vickers.} \\ F = \text{Force appliquée [N]} \\ d = \text{Moyenne des diagonales de l'empreinte [mm]} \end{array}$$

La force et la durée de l'appui sont également normalisées. La norme de référence est la norme ASTM C1327: Standard Test Method for VICKERS Indentation Hardness of Advanced Ceramics.

Par «contenant un», «comprenant un» ou «comportant un», on entend «comportant au moins un», sauf indication contraire.

Sauf indication contraire, dans la présente description, tous les pourcentages sont des pourcentages massiques.

Le produit selon l'invention permet notamment une protection contre tout type de projectiles, par exemple une balle, un obus, une mine ou un élément projeté lors de la détonation d'explosifs, comme des boulons, des clous (ou IED pour «Improvised Explosive Device») et constitue normalement un élément d'armure pour véhicules, généralement sous forme de modules comme des plaques.

Selon l'invention, la plaque de protection comprend classiquement au moins deux'couches : une première pièce en céramique telle que décrite précédemment associée à un autre matériau moins dur et préférentiellement ductile, en face arrière, classiquement appelé « backing », tel que des fibres de polyéthylène (ex : Tensylon™, Dyneema®, Spectra™), d'aramide (ex :Twaron™, Kevlar®), des fibres de verre, ou des métaux comme par exemple l'acier ou les alliages d'aluminium, sous la forme de plaques. Des colles, par exemple à base de polyuréthane ou polymères époxyde, sont utilisées pour lier les différents éléments constituant la plaque de blindage.

Sous l'impact des projectiles, le matériau céramique se fragmente et a pour rôle principal de briser les noyaux des projectiles. Le rôle de la face arrière, associée au matériau céramique constituant le corps céramique, est de consommer l'énergie cinétique des débris et de maintenir un certain niveau de confinement sur la plaque de céramique, optimisé encore par l'enveloppe de confinement.

La société déposante a ainsi développé un nouvel élément de blindage comprenant un élément d'armure dont une plaque en céramique capable de résister à au moins deux tirs successifs selon les standards STANAG 4569 et AEP 55, en considérant le niveau de protection 4, voire 5 et 6.

Un tel blindage destiné aux applications précédemment citées pourra présenter un rapport masse sur surface de blindage supérieur typiquement à 60 kg/m$^2$ mais minimisée par rapport aux plaques actuellement disponibles, pour une même performance antibalistique. Il en résulte une réduction du poids du blindage, pour une protection identique.

Un corps céramique selon l'invention peut être en particulier obtenu par un procédé de frittage, en particulier un procédé de frittage réactif comprenant les étapes suivantes :

a) préparation d'une charge de départ comportant :

- au moins une poudre de particules de carbure de silicium,
- une poudre comprenant du silicium métallique,
- éventuellement une poudre d'un additif de frittage en phase solide,

b) mise en forme de la charge de départ sous la forme d'une préforme,
c) démoulage après durcissement ou séchage,
d) optionnellement, séchage de la préforme, de préférence de manière jusqu'à ce que l'humidité résiduelle soit comprise entre 0 et 0,5% en poids,
e) cuisson et frittage de la préforme sous atmosphère d'azote, ou sous atmosphère non oxydante si de l'azote est présent dans la charge de départ, de préférence à une température comprise entre 1300 et 1600°C, de manière à obtenir le produit fritté.

Dans un tel procédé on utilise au moins une poudre initiale de carbure de silicium dont le diamètre médian des particules est compris entre 10 micromètres et 500 micromètres, et de préférence est compris entre 50 et 300 micromètres. Dans certains modes de réalisation avantageux, on utilise une deuxième poudre de carbure de silicium de taille médiane au moins deux fois inférieure à la première et de préférence de diamètre moyen compris entre 1 et 5 micromètres.

A l'étape b), la préforme peut être obtenue par coulage ou par pressage de la charge ou du mélange dans un moule, avec ou sans vibration.

Pendant la cuisson à l'étape e), l'azote du four de cuisson réagit (« frittage réactif ») avec certains des constituants de la préforme, en particulier avec le silicium métallique voire avec l'Aluminium métallique si celui-ci est présent seul ou en sous forme d'alliage avec le Silicium, avec aussi l'alumine calcinée ou un silicate d'aluminium par exemple de l'argile si ces ajouts sont présents, pour former une matrice et ainsi lier les grains du corps céramique.

Dans le corps céramique selon l'invention les grains de céramique, de préférence des grains de carbure de Silicium et/ou de Bore peuvent être liés par une matrice comprenant ou constituée essentiellement par une phase de nitrure de silicium ou d'oxynitrure de silicium sans ajout de composés à base de terre rare et sans recourir à une température de frittage élevée, c'est-à-dire à une température supérieure à 1650°C. En particulier la cuisson d'une préforme peut être effectuée sous atmosphère d'azote entre 1360 et 1500°C durant un palier suffisamment long (par exemple d'au moins 4 heures) permet d'obtenir un corps céramique fritté présentant une teneur massique en Al et Si métalliques inférieure à 1%.

Le diamètre médian des particules (ou la « taille » médiane) des particules constituant une poudre, est donnée au sens de la présente invention par une caractérisation de distribution granulométrique. Un granulomètre laser permet la mesure des tailles inférieures ou égale à 3 mm.

La caractérisation de distribution granulométrique est réalisée classiquement avec un granulomètre laser conformément à la norme ISO 13320-1. Le granulomètre laser peut être, par exemple, un Partica LA-950 de la société HORIBA. Au sens de la présente description et sauf mention contraire, le diamètre médian des particules désigne respectivement le diamètre des particules au-dessous duquel se trouve 50% en masse de la population.

On appelle « diamètre médian » ou « taille médiane » d'un ensemble de particules, en particulier d'une poudre, le percentile $D_{50}$, c'est-à-dire la taille divisant les particules en première et deuxième populations égales en volume, ces première et deuxième populations ne comportant que des particules présentant une taille supérieure, ou inférieure respectivement, à la taille médiane.

Le mélange initial peut également comprendre une fraction d'une poudre d'alumine de diamètre médian compris entre 1 et 10 micromètres, servant d'agent de frittage.

Le corps céramique selon l'invention est en particulier obtenu par un procédé tel que décrit précédemment, de préférence en présence d'un additif de frittage choisi parmi le carbone, les carbures de bore, de titane, de zirconium ou les borures de zirconium, de titane, seuls ou en mélange.

Dans un mode particulièrement préféré, le produit est obtenu par un procédé tel que décrit précédemment dans lequel l'additif de frittage comprend ou est constitué par le carbure de bore $B_4C$.

Par additif de frittage, souvent plus simplement appelé « additif » dans la présente description, on entend un composé connu habituellement pour permettre et/ou accélérer la cinétique de la réaction de frittage.

Dans un mode de réalisation, la charge de départ contient un liant et/ou un lubrifiant et/ou un agent tensioactif. Dans un mode de réalisation, la charge de départ ne contient pas de liant.

Le mélange est effectué de manière à obtenir une bonne homogénéité de distribution des différents éléments, le temps de mélange pouvant être adapté pour atteindre ce résultat.

De préférence, le mélange des réactifs initiaux s'effectue dans un broyeur à jarre, le temps de mélange étant supérieur à 15 heures. Un temps de mélange de 24 heures est bien adapté. Lorsque le mélange est obtenu, celui peut être atomisé ou granulé, par exemple par «freeze granulation», afin d'obtenir des granules qui seront mises en forme, par exemple par pressage afin d'obtenir une préforme en céramique. D'autres techniques de mise en forme peuvent être utilisées, comme l'injection, le coulage en barbotine. Après mise en forme, la préforme peut être usinée.

La préforme est ensuite frittée. Le frittage s'effectue sous atmosphère azotée.

De préférence, la poudre de carbure de silicium présente une teneur en élément oxygène inférieure à 2%, de préférence inférieure à 1,6%, de préférence inférieure à 1,4%, de préférence inférieure à 1,2%, de préférence inférieure à 1%, voire inférieure à 0,7%, voire inférieure à 0,5%, voire même inférieure à 0,3% poids. Dans un mode de réalisation, la teneur en élément oxygène de la poudre de carbure de silicium peut être diminuée avant utilisation par toute technique connue de l'homme du métier, comme par exemple un lavage à l'acide.

Dans un mode de réalisation, la teneur en aluminium de la charge de départ est inférieure à 1000 ppm, voire inférieure à 500 ppm voire inférieure à 300 ppm, rapporté au poids de la charge de départ.

La cuisson a lieu sous atmosphère contrôlée, de préférence sous azote pour l'obtention de la phase intergranulaire nitrurée.

On appelle « frittage » un traitement thermique par lequel le produit forme une microstructure constituée d'un granulat ou d'une fraction granulaire dont les grains sont solidarisés au moyen d'une matrice. Un produit fritté selon l'invention comporte une matrice contenant au moins une phase nitrure ou oxynitrure de silicium, obtenue par frittage sous atmosphère non oxydante si de l'azote est apporté par au moins un des constituants de la charge de départ ou par frittage sous azote, de préférence à une température comprise entre 1300 et 1600°C, ce dernier type de procédé, permettant un frittage réactif sous azote, étant bien connu de l'homme du métier.

Par « frittage sous azote », on entend un frittage dans un environnement gazeux comportant plus de 90%, de préférence plus de 95% ou, de préférence encore, sensiblement 100% d'azote, en pourcentage volumique. Un tel environnement gazeux est appelé « environnement azoté ».

On qualifie de « résiduel » un constituant présent dans la charge de départ et encore présent dans le produit fritté obtenu à partir de cette charge de départ.

Par impuretés on entend les constituants inévitables, introduits involontairement et nécessairement avec les matières premières ou résultants de réactions avec ces constituants. Les impuretés ne sont pas des constituants nécessaires, mais seulement tolérés. Une telle impureté est en particulier constituée par la silice, désavantageusement connue pour inhiber le frittage du SiC ou encore l'aluminium. Sans sortir du cadre de l'invention, il est possible de limiter l'impureté silice en lavant les poudres de SiC voire d'additif de frittage dans une étape préalable et/ou en ajoutant au mélange initial des additifs contenant du carbone, pour l'éliminer pendant le frittage.

Les exemples qui suivent sont donnés à titre purement illustratif et ne limitent sous aucun des aspects décrits la portée de la présente invention.

Exemples :

Dans tous les exemples qui suivent, une pièce céramique sous la forme d'une plaque de format 500mm×500mm×26mm a été initialement réalisée par coulage en moule plâtre d'une suspension selon le procédé décrit précédemment et les formulations décrites dans le tableau 1 ci-après.

Le corps céramique ainsi obtenu est utilisé comme plaque céramique dans une plaque de blindage. Plus précisément, ledit corps céramique est collé à l'aide d'une colle époxy sur une couche de fibre de verre faisant la liaison avec une plaque de polyéthylène haute densité (UHMWPE) commercialisée par la société DSM Dyneema. L'ensemble est enveloppé dans une couche de Kevlar collée également au moyen d'une résine époxy. La formulation initiale des différents mélanges et les conditions exactes du procédé d'obtention de la plaque de blindage sont reportées dans le tableau 1.

L'exemple comparatif 4 a été réalisé selon les principes décrits dans la demande JP2005247622 citée précédemment.

Il vise à montrer la résistance multi-impact d'un ensemble d'éléments céramique assemblés sous la forme d'une mosaïque, chaque élément céramique individuel de la céramique étant réalisé selon le même procédé et avec le même matériau que l'exemple 1 selon l'invention.

Les carreaux utilisés dans cet ensemble mosaïque ont une taille individuelle de 3 cm par 3 cm et ont été assemblés en une plaque de 50×50 cm selon le procédé décrit dans l'exemple 1 de JP2005247622.

L'exemple comparatif 5 consiste en une plaque antibalistique essentiellement métallique réalisée selon les techniques conventionnelles à partir de la combinaison d'une plaque d'acier d'épaisseur 10 mm commercialisée par la société Thyssen sous la référence Secure 500 ®, et d'un revêtement arrière de 20 mm de styrofoam collé au moyen d'une colle époxy, d'une autre plaque d'acier Secure 500 de 10 mm d'épaisseur et d'un revêtement de 15 mm d'aramide Twaron® (société Teijin) T750 collé. Le tout est enveloppé d'une couche de Kevlar® de la société Dupont, également collée par une résine époxy.

Pour chaque réalisation, les caractéristiques du corps céramique et la composition des différents matériaux le constituant sont rassemblées dans le tableau 2.

Les propriétés balistiques de la plaque de blindage finale sont rassemblées dans le tableau 3. La performance balistique des différentes plaques de blindage a été évalué à l'aide des normes AEP 55 et STANAG 4569 en considérant le niveau de protection balistique 4 (projectile 14,5mm API B32). Quatre tirs ont été réalisés sur les différentes plaques d'armure en configuration 'stand-alone' et en respectant les protocoles et injonction décrites dans les normes AEP 55 et STANAG 4569 (vitesse de tir, distance entre les impacts, vérification de la perforation ou non avec la plaque témoin etc.).

Les résultats reportés dans les tableaux 1 à 3 qui suivent montrent les avantages liés à la mise en œuvre d'une plaque de blindage monolithique de grande taille selon l'invention : les exemples 1 à 3 selon l'invention présentent une résistance à la perforation améliorée de sorte qu'ils sont capables de résister aux impacts successifs de projectile. Leur résistance balistique apparaît ainsi sensiblement équivalente à des plaques à base d'acier comme illustré par l'exemple comparatif 5. Le ratio masse/surface des plaques selon l'invention est cependant très inférieur à de telles plaques à base d'acier, comme illustré dans le tableau 3.

Les exemples comparatifs montrent par ailleurs l'influence des paramètres sur les performances balistiques finalement obtenues pour la plaque de blindage :

L'exemple comparatif 1 montre que le taux de silicium résiduel, c'est-à-dire le silicium métallique n'ayant pas réagi lors de la cuisson avec l'azote, doit être minimisé jusque dans le coeur du matériau constituant le corps céramique. En particulier, lorsque le traitement thermique n'est pas adapté et que le taux de silicium métallique résiduel dans le matériau est trop élevé (0,5% de silicium résiduel par mm d'épaisseur du corps céramique), notamment au cœur du corps céramique (c'est-à-dire sensiblement au milieu de l'épaisseur de la plaque céramique), il en résulte une moindre résistance à la perforation, comme visible dans les résultats de balistique reportés dans le tableau 3.

Selon l'exemple comparatif 2, les grains constitutifs du matériau constituant le corps céramique sont de taille plus importante que selon la présente invention, avec pour résultat une performance balistique inférieure. L'épaississement de la plaque céramique selon l'exemple comparatif 3 ne permet pas de compenser cette déficience.

L'exemple comparatif 4 montre en outre qu'une structure mosaïque selon l'art antérieur présente des performances balistiques fortement réduites vis à vis de plaques de grande taille selon l'invention.

Bien entendu, la présente invention n'est pas limitée aux modes de réalisation décrits et représentés, fournis à titre d'exemples. En particulier, des combinaisons des différents modes de réalisation décrits entrent également dans le cadre de l'invention, qui est défini par les revendications annexées. L'invention n'est pas limitée non plus par la forme ou les dimensions du produit fritté à base de carbure de silicium.

Tableau 1

| | invention exemple 1 | invention exemple 2 | invention exemple 3 | comparatif exemple 1 | comparatif exemple 2 | comparatif exemple 3 | comparatif exemple 4 |
|---|---|---|---|---|---|---|---|
| Composition du mélange initial (% massique) | | | | | | | |
| Poudre SiC 100$\mu$m-1100$\mu$m $D_{50}$ = 600$\mu$m | | | | | 80,2 | 80,2 | |
| Poudre SiC 20-200 $\mu$m $D_{50}$ = 100$\mu$m | | | 39,5 | | | | |
| Poudre SiC 10-150$\mu$m $D_{50}$ = 75 $\mu$m | 39,5 | 39,5 | | 39,5 | | | 39,5 |
| Poudre SiC 0,1-5$\mu$m $D_{50}$ = 2.5 $\mu$m | 37,5 | 37,5 | 37,5 | 37,5 | | | 37,5 |
| Poudre Si 0,5-50$\mu$m $D_{50}$ = 20$\mu$m | 17 | 17 | 17 | 17 | 16,0 | 16,0 | 17 |
| Argile calcinée | | | | | 3,0 | 3,0 | |
| Poudre d'Alumine $D_{50}$=2,5 $\mu$m | 5,0 | 5,0 | 5,0 | 5,0 | | | 5,0 |
| $Fe_2O_3$ 2,5 $\mu$m | 0,5 | 0,5 | 0,5 | 0,5 | | | 0,5 |
| $B_4C$ 95% <45$\mu$m $D_{50}$=18 $\mu$m | 0,5 | 0,5 | 0,5 | 0,5 | 0,8 | 0,8 | 0,5 |
| total minéraux % | 100 | 100 | 100 | 100 | 100 | 100 | 100 |
| eau ajoutée % | 12,5 | 12,5 | 12,5 | 12,5 | 6 | 6 | 12,5 |
| dispersant ajouté | 0,5 | 0,5 | 0,5 | 0,5 | 0,2 | 0,2 | 0,5 |
| Conditions de la mise en forme | | | | | | | |
| Séchage (T°/ durée) | 110°C / 24h | 11 0°C / 24h | 110°C /24h | 110°C / 24h | 110°C / 24h | 110°C / 24h | 110°C / 24h |
| Cuisson (T°/durée/ temps) | 1420°C/ 8h/ Azote | 1420°C/ 4h/ Azote | 1420°C/ 8h/ Azote | 1350°C/ 4h/ Azote | 1420°C/ 8h/ Azote | 1420°C/ 8h/ Azote | 1420°C/ 8h/ Azote |

Tableau 2

| | invention exemple 1 | invention exemple 2 | invention exemple 3 | comparatif exemple 1 | comparatif exemple 2 | comparatif exemple 3 | comparatif exemple 4 |
|---|---|---|---|---|---|---|---|
| **Caractéristiques corps / matériau céramique** | | | | | | | |
| épaisseur (mm) | 26 | 26,5 | 25,7 | 27 | 27 | 35 | 26 |
| Forme de la plaque | monolithique | monolithique | monolithique | monolithique | monolithique | monolithique | mosaïque |
| surface (cm$^2$) | 50×50 | 50×50 | 50×50 | 50×50 | 50×50 | 50×50 | 3x3 |
| Fraction granulaire (nature/poids relatif) | SiC / 75% | SiC / 75% | SiC / 77% | SiC / 75% | SiC / 75% | SiC / 75% | SiC / 75% |
| Diamètre équivalent maximal des grains de SiC dans le matériau | 0,150mm | 0,150mm | 0,2mm | 0,150mm | **1,1mm** | **1,1mm** | 0,150mm |
| Diamètre équivalent moyen des grains de SiC dans le matériau | 30 $\mu$m | 30 $\mu$m | 80 $\mu$m | 30 $\mu$m | 600 $\mu$m | 600 $\mu$m | 30 $\mu$m |
| Matrice liant les grains (nature/ poids relatif) | Si$_3$N$_4$*/ 25% | Si$_3$N$_4$*/ 25% | Si$_3$N$_4$*/ 22% | Si$_3$N$_4$*/ 25% | Si$_3$N$_4$*/ 25% | Si$_3$N$_4$*/ 25% | Si$_3$N$_4$*/ 25% |
| porosité ouverte % | 10 | 11,5 | 9 | 13 | 14 | 14 | 9,7 |
| masse volumique apparente % | 2,81 | 2,75 | 2,84 | 2,7 | 2,67 | 2,67 | 2,83 |
| teneur en N | 10% | 5% | 9% | 3,5% | 10% | 10% | 10% |
| % Si résiduel (dans le matériau) | <0,5 | 9 | 0,7 | 13,5 | <0,5 | <0,5 | <0,5 |
| % Si résiduel /mm épaisseur | <0,02 | 0,35 | 0,03 | 0,50 | <0,02 | <0,02 | <0,02 |

(suite)

| Caractéristiques revêtement arrière | | | | | | | |
|---|---|---|---|---|---|---|---|
| Nature chimique | Fibres de verre + PE haute densité | Fibres de verre + PE haute densité | Fibres de verre + PE haute densité | Fibres de verre + PE haute densité | Fibres de verre + PE haute densité | Fibres de verre + PE haute densité | Fibres de verre + PE haute densité |
| Epaisseur | 21 mm | 21mm | 21mm | 21mm | 21mm | 21mm | 21mm |
| Caractéristiques enveloppe confinement | | | | | | | |
| Nature chimique | Fibres d'aramide (Kevlar®) | Kevlar® | Kevlar® | Kevlar® | Kevlar® | Kevlar® | Kevlar® |
| * 23% poids de $Si_3N_4$, 2% poids de $Si_2ON_2$ | | | | | | | |

Tableau 3

| | invention exemple 1 | invention exemple 2 | invention exemple 3 | comparatif exemple 1 | comparatif exemple 2 | comparatif exemple 3 | comparatif exemple 4 | comparatif exemple 5 |
|---|---|---|---|---|---|---|---|---|
| **Caractéristiques plaque ce blindage** | | | | | | | | |
| ratio masse / surface | 95 | 95 | 95 | 95 | 94 | 115 | 96 | 175 |
| **Essais balistiques** | | | | | | | | |
| Observation visuelle après les tirs | pas de perforation | pas de perforation | pas de perforation | perforation | perforation | perforation | perforation | pas de perforation |

**Revendications**

1. Plaque de blindage antibalistique comportant un corps céramique constitué dans un matériau dur, muni sur sa face intérieure d'un revêtement arrière de dissipation de l'énergie, de préférence constitué dans un matériau de dureté inférieure à celui du matériau constituant le corps céramique,

   - ledit corps céramique étant monolithique et présentant une surface supérieure à 150 cm$^2$, une épaisseur supérieure à 12 mm et une masse volumique apparente inférieure à 3,5 g/cm$^3$,
   - le matériau constituant le corps céramique comprenant des grains de matériau céramique de dureté Vickers supérieure à 15 GPa, et une matrice liant lesdits grains, ladite matrice **étant essentiellement constituée** d'une phase de nitrure de silicium et/ou d'une phase d'oxynitrure de silicium ou d'une phase SiMON où M est un métal choisi parmi Ca, Mg, Sr, Ba, ladite matrice représentant entre 5 et 40% poids dudit matériau constitutif du corps céramique,
   - lesdits grains de matériau céramique présentant un diamètre équivalent maximal inférieur ou égal à 800 micromètres,
   - ledit matériau constituant le corps céramique présentant une porosité ouverte supérieure à 5% et inférieure à 14%,
   - la teneur massique en silicium sous la forme métallique dans ledit matériau, exprimée par mm d'épaisseur dudit corps, étant inférieure à 0,5%.

2. Plaque de blindage selon la revendication 1, dans laquelle les grains constitutifs du matériau céramique sont constitués essentiellement de SiC, de préférence sous forme alpha.

3. Plaque de blindage selon l'une des revendications précédentes, dans laquelle le silicium sous la forme métallique est présent dans ledit matériau constituant le corps céramique selon un gradient de concentration depuis les bords externes jusqu'au coeur dudit corps, selon son épaisseur.

4. Plaque de blindage selon l'une des revendications précédentes, qui présente un ratio masse sur surface, mesuré en kg/m$^2$, supérieur à 60 et de préférence inférieur à 200.

5. Plaque de blindage selon l'une des revendications précédentes, dans laquelle la somme totale des terres rares dans le matériau constituant le corps céramique est inférieure à 0,05% poids.

6. Plaque de blindage selon l'une des revendications précédentes, dans laquelle les grains dans le matériau constituant le corps céramique présentent un diamètre équivalent maximal compris entre 10 micromètres et 500 micromètres.

7. Plaque de blindage selon l'une des revendications précédentes, dans laquelle le matériau constituant le corps céramique ne contient aucun élément du groupe des terres rares, de préférence pas d'yttrium, de préférence pas de lanthane et de préférence encore aucun élément du groupe des actinides.

8. Plaque de blindage selon l'une des revendications précédentes, dans laquelle les grains constitutifs du matériau céramique, présentent un diamètre équivalent moyen supérieur à 5 micromètres et inférieur à 300 micromètres.

9. Plaque de blindage selon l'une des revendications précédentes, dans laquelle la teneur en silicium sous la forme métallique du matériau constituant le corps céramique est inférieure à 10% poids.

10. Plaque de blindage selon l'une des revendications précédentes, dans laquelle la teneur en azote est supérieure à 4% poids dans le matériau constituant le corps céramique.

11. Plaque de blindage selon l'une des revendications précédentes, dans laquelle la matrice liante est essentiellement constituée de nitrure de silicium Si$_3$N$_4$ et/ou de l'oxynitrure de silicium Si$_2$ON$_2$, de préférence est essentiellement constituée de nitrure de silicium Si$_3$N$_4$.

12. Plaque de blindage selon l'une des revendications précédentes, dans laquelle le matériau constituant le revêtement arrière est choisi parmi les polyéthylènes PE, notamment les polyéthylènes ultra haute densité (UHMPE), les fibres de verre ou de carbone, les aramides, les métaux tel que l'aluminium, le titane ou leur alliages ou l'acier.

13. Plaque de blindage selon l'une des revendications précédentes, dans laquelle l'ensemble corps céramique-revêtement arrière est entouré par une enveloppe d'un matériau de confinement.

**14.** Plaque de blindage selon la revendication précédente, dans laquelle le matériau constituant l'enveloppe est choisi parmi les polyéthylènes PE, notamment les polyéthylènes ultra haute densité (UHMPE), les fibres de verre ou de carbone, les aramides, les métaux tel que l'aluminium ou l'acier.

**15.** Corps céramique monolithique sous forme de plaque et présentant une surface supérieure à 150 cm$^2$ et une épaisseur supérieure à 12 mm, une masse volumique apparente inférieure à 3,5 g/cm$^3$, constitué d'un matériau comprenant :

- des grains de matériau céramique de dureté Vickers supérieure à 15 GPa, de préférence un carbure ou un borure métallique, de préférence encore un carbure de silicium ou de bore ou un mélange de ces deux carbures, lesdits grains présentant un diamètre équivalent maximal inférieur ou égal à 500 micromètres, et
- une matrice liant lesdits grains, ladite matrice **étant essentiellement constituée d**'une phase nitrure de silicium et/ou d'une phase oxynitrure de silicium ou d'une phase SiMON où M est un métal choisi parmi Ca, Mg, Sr, Ba, ladite matrice représentant entre 5 et 40% poids dudit matériau constitutif du corps céramique,

ledit matériau céramique présentant une porosité ouverte supérieure à 5% et inférieure à 14% et une teneur massique en silicium sous la forme métallique dans ledit matériau, exprimée par mm d'épaisseur dudit corps, inférieure à 0,5%.

**Patentansprüche**

**1.** Antiballistische Panzerplatte, vorweisend einen Keramikkörper, der aus einem harten Material gebildet ist, das auf seiner Innenseite mit einer rückseitigen Energieableitungsbeschichtung versehen ist, die vorzugsweise aus einem Material mit geringerer Härte als diejenige des Materials gebildet ist, aus dem der Keramikkörper gebildet ist,

- wobei der Keramikkörper monolithisch ist und eine Oberfläche, die mehr als 150 cm$^2$, eine Dicke, die mehr als 12 mm, und eine Schüttdichte, die weniger als 3,5 g/cm$^3$ beträgt, aufweist,
- wobei das Material, aus dem der Keramikkörper gebildet ist, Korngefüge aus Keramikmaterial mit einer Vickershärte von mehr als 15 GPa und eine Matrix, die die Korngefüge bindet, umfasst, wobei die Matrix **im Wesentlichen** aus einer Siliziumnitridphase und/oder einer Siliziumoxinitridphase oder einer SiMON-Phase **gebildet ist,** wobei M ein Metall ist, das aus Ca, Mg, Sr, Ba ausgewählt ist, wobei die Matrix zwischen 5 und 40 Gew.-% des Materials ausmacht, das den Keramikkörper bildet,
- wobei die Korngefüge des Keramikmaterials einen Durchmesser aufweisen, der maximal weniger als oder gleich 800 Mikrometern entspricht,
- wobei das Material, aus dem der Keramikkörper gebildet ist, eine offene Porosität von mehr als 5 % und weniger als 14 % aufweist,
- wobei der Massengehalt an Silizium in metallischer Form in dem Material, ausgedrückt als mm Dicke des Körpers, weniger als 0,5 % beträgt.

**2.** Panzerplatte nach Anspruch 1, wobei die das Keramikmaterial bildenden Korngefüge im Wesentlichen aus SiC, vorzugsweise in Alpha-Form, gebildet sind.

**3.** Panzerplatte nach einem der vorstehenden Ansprüche, wobei Silizium in metallischer Form in dem Material, aus dem der Keramikkörper gebildet ist, gemäß einem Konzentrationsgradienten von den Außenkanten zu dem Kern des Körpers gemäß seiner Dicke vorhanden ist.

**4.** Panzerplatte nach einem der vorstehenden Ansprüche, die ein Verhältnis von Masse über Oberfläche, gemessen in kg/m$^2$, von mehr als 60 und vorzugsweise weniger als 200 aufweist.

**5.** Panzerplatte nach einem der vorstehenden Ansprüche, wobei die Gesamtsumme der Seltenerden in dem Material, aus dem der Keramikkörper gebildet ist, weniger als 0,05 Gew.-% beträgt.

**6.** Panzerplatte nach einem der vorstehenden Ansprüche, wobei die Korngefüge in dem Material, aus dem der Keramikkörper gebildet ist, einen Durchmesser aufweisen, der maximal zwischen 10 Mikrometern und 500 Mikrometern entspricht.

7. Panzerplatte nach einem der vorstehenden Ansprüche, wobei das Material, aus dem der Keramikkörper gebildet ist, kein Element aus der Gruppe der Seltenerden, vorzugsweise kein Yttrium, vorzugsweise kein Lanthan und weiter bevorzugt kein Element aus der Aktinidengruppe enthält.

8. Panzerplatte nach einem der vorstehenden Ansprüche, wobei die Korngefüge, die das Keramikmaterial bilden, einen Durchmesser aufweisen, der durchschnittlich mehr als 5 Mikrometern und weniger als 300 Mikrometern entspricht.

9. Panzerplatte nach einem der vorstehenden Ansprüche, wobei der Gehalt an Silizium in der metallischen Form des Materials, aus dem der Keramikkörper gebildet ist, weniger als 10 Gew.-% beträgt.

10. Panzerplatte nach einem der vorstehenden Ansprüche, wobei der Stickstoffgehalt in dem Material, aus dem der Keramikkörper gebildet ist, mehr als 4 Gew.-% beträgt.

11. Panzerplatte nach einem der vorstehenden Ansprüche, wobei die Bindematrix im Wesentlichen aus Siliziumnitrid $Si_3N_4$ und/oder Siliziumoxinitrid $Si_2ON_2$ gebildet ist, vorzugsweise im Wesentlichen aus Siliziumnitrid $Si_3N_4$ gebildet ist.

12. Panzerplatte nach einem der vorstehenden Ansprüche, wobei das Material, aus dem die rückseitige Beschichtung gebildet ist, aus Polyethylenen PE, insbesondere Polyethylenen ultrahoher Dichte (UHMPE), Glas- oder Kohlenstofffasern, Aramiden, Metallen wie zum Beispiel Aluminium, Titan oder deren Legierungen oder Stahl ausgewählt ist.

13. Panzerplatte nach einem der vorstehenden Ansprüche, wobei die Baugruppe Keramikkörper - rückseitige Beschichtung durch eine Hülle aus einem Einschlussmaterial umgeben ist.

14. Panzerplatte nach dem vorstehenden Anspruch, wobei das Material, aus dem die Hülle gebildet ist, aus Polyethylenen PE, insbesondere Polyethylenen ultrahoher Dichte (UHMPE), Glas- oder Kohlenstofffasern, Aramiden, Metallen wie zum Beispiel Aluminium oder Stahl ausgewählt ist.

15. Monolithischer Keramikkörper in Form einer Platte und aufweisend eine obere Oberfläche von mehr als 150 cm$^2$ und eine Dicke von mehr als 12 mm, eine Schüttdichte von weniger als 3,5 g/cm$^3$, der aus einem Material gebildet ist, umfassend:

   - Korngefüge aus keramischem Material mit einer Vickershärte von mehr als 15 GPa, vorzugsweise Metallkarbid oder -borid, weiter bevorzugt Silizium-oder Borkarbid oder eine Mischung dieser zwei Karbide, wobei die Korngefüge einen Durchmesser aufweisen, der maximal weniger als oder gleich 500 Mikrometern entspricht, und
   - eine Matrix, die die Korngefüge bindet, wobei die Matrix **im Wesentlichen** aus einer Siliziumnitridphase und/oder einer Siliziumoxinitridphase oder einer SiMON-Phase **gebildet ist,** wobei M ein Metall ist, das aus Ca, Mg, Sr, Ba ausgewählt ist, wobei die Matrix zwischen 5 und 40 Gew.-% des Materials ausmacht, das den Keramikkörper bildet,

   wobei das Keramikmaterial eine offene Porosität von mehr als 5 % und weniger als 14 % und einen Massengehalt an Silizium in metallischer Form in dem Material, ausgedrückt als mm Dicke des Körpers, von weniger als 0,5 % aufweist.

## Claims

1. An antiballistic armor plate including a ceramic body consisting of a hard material, provided, on its inner face, with a back energy-dissipating coating, preferably consisting of a material having a hardness that is lower than that of the constituent material of the ceramic body, said plate being **characterized in that**:

   - said ceramic body being monolithic and having an area that is larger than 150 cm$^2$, a thickness that is greater than 12 mm and a bulk density that is lower than 3.5 g/cm$^3$;
   - the constituent material of the ceramic body comprising grains of ceramic material having a Vickers hardness that is higher than 15 GPa, and a matrix binding said grains, said matrix consisting essentially of a silicon nitride phase and/or a silicon oxynitride phase or of a SiMON phase, where M is a metal chosen from Ca, Mg, Sr, Ba, said matrix representing between 5 and 40% by weight of said constituent material of the ceramic body;

- the maximum equivalent diameter of said grains of ceramic material being smaller than or equal to 800 micrometers;
- said constituent material of the ceramic body having an open porosity that is higher than 5% and lower than 14%;
- the metallic silicon content in said material, expressed per mm of thickness of said body, being lower than 0.5% by weight.

2. The armor plate as claimed in claim 1, wherein the constituent grains of the ceramic material consist essentially of SiC, preferably in the alpha form.

3. The armor plate as claimed in either of the preceding claims, wherein the metallic silicon is present in said constituent material of the ceramic body along a concentration gradient from the outer edges to the core of said body, in the direction of its thickness.

4. The armor plate as claimed in one of the preceding claims, which has a mass-to-area ratio, measured in $kg/m^2$, that is higher than 60 and preferably lower than 200.

5. The armor plate as claimed in one of the preceding claims, wherein the total sum of rare-earth elements in the constituent material of the ceramic body is lower than 0.05% by weight.

6. The armor plate as claimed in one of the preceding claims, wherein the maximum equivalent diameter of the grains in said constituent material of the ceramic body is comprised between 10 micrometers and 500 micrometers.

7. The armor plate as claimed in one of the preceding claims, wherein the constituent material of the ceramic body contains no elements from the group of the rare-earth elements, preferably no yttrium, preferably no lanthanum and more preferably no elements from the group of the actinides.

8. The armor plate as claimed in one of the preceding claims, wherein the mean equivalent diameter of the constituent grains of the ceramic material is larger than 5 micrometers and smaller than 300 micrometers.

9. The armor plate as claimed in one of the preceding claims, wherein the metallic silicon content of the constituent material of the ceramic body is lower than 10% by weight.

10. The armor plate as claimed in one of the preceding claims, wherein the nitrogen content in the constituent material of the ceramic body is higher than 4% by weight.

11. The armor plate as claimed in one of the preceding claims, wherein the binding matrix essentially consists of silicon nitride $Si_3N_4$ and/or silicon oxynitride $Si_2ON_2$, and preferably essentially consists of silicon nitride $Si_3N_4$.

12. The armor plate as claimed in one of the preceding claims, wherein the constituent material of the back coating is chosen from the polyethenes PE, in particular ultra-high-molecular-weight polyethenes (UHMPEs), glass or carbon fibers, aramids, metals such as aluminum, titanium or their alloys, or steel.

13. The armor plate as claimed in one of the preceding claims, wherein the ceramic body-back coating assembly is surrounded by an envelope of a confining material.

14. The armor plate as claimed in the preceding claim, wherein the constituent material of the envelope is chosen from the polyethenes PE, in particular ultra-high-molecular-weight polyethenes (UHMPEs), glass or carbon fibers, aramids, metals such as aluminum or steel.

15. A monolithic ceramic body in the form of a plate and having an area that is larger than 150 $cm^2$ and a thickness that is greater than 12 mm, and a bulk density that is lower than 3.5 $g/cm^3$, consisting of a material comprising:

- grains of ceramic material having a Vickers hardness that is higher than 15 GPa, preferably a metal carbide or boride, more preferably a silicon or boron carbide or a mixture of these two carbides, the maximum equivalent diameter of said grains being smaller than or equal to 500 micrometers; and
- a matrix binding said grains, said matrix consisting essentially of a silicon nitride and/or silicon oxynitride phase or of a SiMON phase, where M is a metal chosen from Ca, Mg, Sr, Ba, said matrix representing between 5 and 40% by weight of said constituent material of the ceramic body; said ceramic material having an open porosity that is higher than 5% and lower than 14% and a metallic silicon content in said material, expressed per mm of thickness of said body, that is lower than 0.5% by weight.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2005247622 B
- WO 2013186453 A1
- EP 1380809 A2
- EP 1710218 A1
- US 4604249 A
- US 4415632 A
- US 6389594 B1
- WO 2008130451 A
- EP 2095055 A1
- WO 2014096846 A